# FASCICULE DE BREVET EUROPEEN

(11) **EP 1 979 583 B1**
(45) Date de publication et mention de la délivrance du brevet: **06.07.2011**
(21) Numéro de dépôt: 07730841.9
(22) Date de dépôt: 22.01.2007
(51) Int. Cl.: F01L 3/02, C21D 6/00, C22C 38/24

(54) **PROCÉDÉ DE FABRICATION D'UNE SOUPAPE DE MOTEUR À EXPLOSION, ET SOUPAPE AINSI OBTENUE**
VERFAHREN ZUR HERSTELLUNG VON EINEM VENTIL FÜR EINEN VERBRENNUNGSMOTOR UND DADURCH HERGESTELLTES VENTIL
METHOD FOR MAKING A COMBUSTION ENGINE VALVE, AND VALVE THUS OBTAINED

(30) Priorité: 26.01.2006 FR 0600724
(43) Date de publication de la demande: 15.10.2008
(73) Titulaire: AUBERT & DUVAL, 75015 Paris (FR)
(72) Inventeur: MONTAGNON, Jacques, 94210 La Varenne Saint-Hilaire (FR)
(74) Mandataire: Domenego, Bertrand
(86) Numéro de dépôt international: PCT/FR2007/000121
(87) Numéro de publication internationale: WO 2007/085720

(56) Documents cités:
- DE-A1- 4 212 966
- DE-A1- 19 620 914
- DE-C1- 4 406 896
- GB-A- 771 137
- US-A- 4 737 201
- US-A- 4 741 080
- US-A- 6 099 668
- US-B1- 6 635 128
- PATENT ABSTRACTS OF JAPAN vol. 1999, no. 13, 30 novembre 1999 (1999-11-30) -& JP 11 217653 A (SANYO SPECIAL STEEL CO LTD), 10 août 1999 (1999-08-10)
- PATENT ABSTRACTS OF JAPAN vol. 2000, no. 03, 30 mars 2000 (2000-03-30) -& JP 11 335791 A (AICHI STEEL WORKS LTD), 7 décembre 1999 (1999-12-07)
- PATENT ABSTRACTS OF JAPAN vol. 2000, no. 11, 3 janvier 2001 (2001-01-03) -& JP 2000 226641 A (NSK LTD), 15 août 2000 (2000-08-15)
- PATENT ABSTRACTS OF JAPAN vol. 1999, no. 08, 30 juin 1999 (1999-06-30) -& JP 11 061351 A (DAIDO STEEL CO LTD), 5 mars 1999 (1999-03-05)
- PATENT ABSTRACTS OF JAPAN vol. 013, no. 510 (C-654), 15 novembre 1989 (1989-11-15) -& JP 01 205063 A (DAIDO STEEL CO LTD), 17 août 1989 (1989-08-17)

## Description

L'invention concerne la sidérurgie. Plus précisément, elle concerne la fabrication de soupapes de moteur à explosion.

Une application privilégiée de l'invention est la fabrication de soupapes d'admission de moteurs diesel dits « EGR » (exhaust gases recyling) dans lesquels ces soupapes sont mises au contact de gaz de combustion réinjectés à l'admission pour assurer leur complète combustion et la diminution de la quantité de rejets polluants.

Lors de leur utilisation, ces soupapes peuvent localement atteindre des températures de 400 à 500°C et sont soumises à des sollicitations mécaniques élevées et à un environnement corrosif. En outre les condensats qui se déposent sur les soupapes lors de l'arrêt prolongé de ce type de moteur sont aussi très agressifs.

Dans ces conditions agressives, les nuances d'aciers au carbone, d'aciers faiblement alliés et d'aciers alliés au chrome et au silicium habituellement utilisées pour fabriquer des soupapes ont une tenue insuffisante à la corrosion.

Les aciers austénitiques très alliés offrent une très bonne tenue à la corrosion dans ces conditions, mais leur coût matière est nettement plus élevé.

De plus, ces aciers austénitiques ne peuvent pas être durcis par trempe. Or la portée de la soupape et l'extrémité de sa tige doivent présenter des duretés élevées et une bonne résistance à l'abrasion. Généralement, les soupapes en acier austénitique sont donc constituées de deux à trois composants, dont :
- la portée du siège de soupape, réalisée dans un alliage de haute dureté et résistant à la corrosion, déposé par revêtement,
- l'extrémité la plus froide de la tige, réalisée dans un acier martensitique capable de duretés élevées par trempe.

Dans tous les cas, cela augmente le coût de la soupape.

En outre, la haute tenue au fluage des aciers austénitiques n'est pas utile à des températures inférieures ou égales à 500°C. Enfin, la plus faible conductivité thermique des aciers austénitiques est plutôt défavorable en service.

L'emploi des aciers austénitiques constitue donc une « surqualité » sur certains aspects, et présente également des inconvénients techniques. Et le coût élevé de la mise en oeuvre de cette solution la rend globalement insatisfaisante sur le plan industriel.

Le document US-A-4 741 080 divulgue un procédé de production d'une soupape monobloc en acier, éventuellement en acier austénitique, pour moteurs à explosion, le dit procédé comprenant une transformation mécanique à chaud comme l'extrusion par forgeage suivi d'un forgeage, d'un refroidissement à l'air, et d'un traitement thermique.

Le document JP-A-11- 217653 divulgue l'acier de composition suivante, en pourcentage pondéral: 0,25-0,50% C, >1,0-2,5% Si, <=1,0% Mn, 10-16% Cr, 0,05-0,2% N, <=20 ppm O, reste Fe avec les impuretés inévitables, avec optionnellement un ou plus des éléments suivants <=1,0% Mo, <=1,0% V, and <=1,0% W.

Il existe donc un besoin de la part des motoristes de disposer d'un procédé permettant de fabriquer des soupapes d'admission de moteurs diesel EGR, ayant des propriétés mécaniques en service élevées et une résistance à la corrosion élevée, tout en conservant un coût de fabrication bas, notamment parce qu'il serait possible de réaliser cette soupape sous forme d'une seule pièce massive.

A cet effet, l'invention a pour objet un procédé de fabrication d'une soupape monobloc de moteur à explosion, caractérisé en ce que :
- on élabore et on coule un acier de composition, en pourcentages pondéraux :
   - 0,45 % ≤ C ≤ 0,55 %
   - 12 % ≤ Cr ≤ 18 %
   - 1 % ≤ Si ≤ 2,5 %
   - traces ≤ Mn ≤ 2 %
   - 0,2 % ≤ V ≤ 0,5%
   - traces ≤ Mo ≤ 0,5 %
   - 0,05 % ≤ N ≤ 0,15 %, avec 0,55 % ≤ C + N ≤ 0,70 %
   - traces ≤ Ni ≤ 1 %
   - traces ≤ Cu ≤ 0,25 %, ou Cu ≤ 0,5 Ni si Cu > 0,25 %
   - traces ≤ Co ≤ 1 %
   - traces ≤ W ≤ 0,2 %
   - traces ≤ Nb ≤ 0,15%
   - traces ≤ Al ≤ 0,025%
   - traces ≤ Ti ≤ 0,010%
   - traces ≤ S ≤ 0,030%
   - traces ≤ P ≤ 0,040%
   - traces ≤ B ≤ 0,0050%
   le reste étant du fer et des impuretés résultant de l'élaboration ;
   - on le transforme thermomécaniquement à chaud, par exemple par laminage et/ou forgeage entre 1000 et 1200°C ;
   - optionnellement on réalise un recuit d'adoucissement, entre 650 et 900°C pendant 2 à 8 h suivi d'un refroidissement à l'air ou dans le four ;
   - et on réalise le ou les traitements thermiques ou thermomécaniques finaux qui vont conférer à la soupape sa forme et/ou ses propriétés définitives, comportant une misé en forme à chaud par forgeage ou extrusion, en terminant la fabrication par une trempe superficielle localisée, telle qu'une trempe HF, une trempe plasma ou un choc laser, exécutée sur certaines parties de la soupape.

De préférence 14 % ≤ Cr ≤ 16 %.

De préférence 1 % ≤ Si ≤ 2%.

De préférence 0,05 % ≤ N ≤ 0,12 %.

De préférence, trace ≤ Mn ≤ 1 %.

De préférence Si % / Mn % ≥ 1.

De préférence 0,2 % ≤ Mo ≤ 0,5 %.

De préférence, traces ≤ Ni ≤ 0,5 %.

De préférence, trace ≤ Al ≤ 0,015%.

De préférence, traces ≤ S ≤ 0,003%.

De préférence, traces ≤ P ≤ 0,010%.

De préférence, traces ≤ B ≤ 0,0020%.

Lesdits traitements thermiques ou thermomécaniques finaux peuvent comporter une trempe suivie d'un revenu.

Lesdits traitements thermique ou thermomécaniques finaux peuvent comporter un recuit suivi d'un usinage.

Les parties de la soupape concernées par la trempe superficielle localisée peuvent être l'extrémité de la tige et/ou la portée du siège.

L'invention a également pour objet une soupape monobloc de moteur à explosion, caractérisée en ce qu'elle a été fabriquée par le procédé précédent.

Comme on l'aura compris, l'invention repose d'abord sur un équilibrage précis de la composition d'un acier inoxydable. Il permet de procurer à la pièce fabriquée une structure martensitique et des propriétés mécaniques favorables, à la suite de traitements thermomécaniques adéquats, ainsi qu'une résistance à la corrosion proche de celle des aciers inoxydables austénitiques. Elle repose ensuite sur des traitements thermiques et mécaniques conférant à la soupape ses propriétés remarquables, et notamment une trempe superficielle localisée, par exemple (mais pas exclusivement) une trempe HF, de ses parties les plus sollicitées qui termine la fabrication.

L'invention sera mieux comprise à l'aide de la description qui suit, donnée en référence à :
- la figure 1 qui montre le diagramme de phases d'un exemple d'acier utilisable dans l'invention, en fonction de sa teneur en Si ;
- la figure 2 qui montre les propriétés mécaniques en fonction de la température d'un exemple d'acier utilisable dans l'invention ;
- la figure 3 qui montre les propriétés mécaniques en fonction de la température d'un exemple d'acier de référence, non conforme à l'invention.

L'acier utilisé doit répondre à différents critères propres à l'application envisagée, à savoir la fabrication de soupapes monobloc pour moteurs à explosion.

Le volume de métal dans la tige et la tête de soupape doit présenter une dureté et une résistance à l'abrasion pas trop élevées eu égard à la gamme de finition des pièces (usinage, rectification, polissage, ...) et une ductilité suffisante.

En revanche, la portée du siège de soupape et l'extrémité de la tige doivent offrir une dureté et une tenue à l'abrasion très élevées : pour cela, l'acier doit pouvoir répondre à un traitement de surface spécifique, à savoir une trempe superficielle localisée. Une telle trempe superficielle localisée est, le plus classiquement, réalisée par un procédé dénommé «trempe sous haute fréquence » ou trempe HF : cette opération consiste à réchauffer fortement les seules zones concernées, au moyen d'un système inductif, pendant un bref instant. La surface des soupapes en acier martensitique, localement réausténisée par ce « flash » thermique, subit ensuite une trempe martensitique drastique du fait que la faible épaisseur superficielle réchauffée est rapidement refroidie par conduction par le substrat sous-jacent qui est resté froid. Dans ces conditions, les surfaces traitées par trempe HF, et dont la structure est martensitique, atteignent aisément des duretés de 55 à 60 HRC, qui sont celles requises pour l'application envisagée. La dureté moyenne recherchée pour des contraintes de tenue à l'usure est le plus généralement de 58 HRC.

On peut atteindre un résultat comparable avec d'autres procédés de traitement de surface consistant, comme la trempe HF, en une trempe superficielle localisée de la pièce, tels que la trempe plasma ou le choc laser (dit aussi « laser peening »).

Outre ces différents critères liés à l'utilisation de la soupape, l'acier utilisé dans l'invention doit également remplir différentes contraintes liées à la fabrication de la soupape. En effet, la fabrication des soupapes a généralement lieu en deux phases principales, qui imposent chacune des contraintes fortes sur les propriétés et le comportement du métal.

Le métallurgiste va tout d'abord élaborer, couler et mettre en forme à chaud un acier de composition donnée, qu'il va ensuite livrer au fabriquant de soupapes sous forme de barres.

Ce fabriquant procède au cisaillage de ces barres, opération encore appelée « lopinage », puis il procède à la mise en forme des soupapes, typiquement par forgeage ou extrusion.

Une première exigence est que l'acier utilisé dans l'invention ait un coût matière modéré.

Pour le métallurgiste, un faible coût matière implique d'abord l'absence d'additions conséquentes en éléments coûteux tels que le nickel, le molybdène, le tungstène... et ensuite l'utilisation de matières premières à faible coût, couramment disponibles sur le marché et ne nécessitant pas de sélection sévère. Ce dernier point implique lui-même que l'acier recherché puisse accepter les éléments résiduels inévitables et en teneurs variables (nickel, cuivre, vanadium, molybdène...) que l'on trouve dans les ferrailles de recyclage courantes.

Lors de l'élaboration de l'acier, le métallurgiste doit encore pouvoir utiliser des installations à haut rendement (fours électriques classiques, coulée continue...) et des procédés d'élaboration simples et fiables. En premier lieu, dès lors que la voie « lingot » est utilisée par l'élaborateur, l'acier doit être suffisamment peu « trempant » de façon à éviter les phénomènes de « tapure » des lingots (fissurations superficielles lors du refroidissement), qui sont fréquemment une source de rebuts.

Pour le transformateur en demi-produits (le lamineur, ou le forgeron par exemple), l'acier doit idéalement offrir de bonnes propriétés de malléabilité à haute température et l'absence de sensibilité à la formation de criques à chaud. Là encore, une faible trempabilité de l'acier constitue un avantage lorsque la gamme de transformation comporte plusieurs étapes intermédiaires de laminage ou de forgeage. En effet, une faible trempabilité limite les risques de tapure des demi-produits intermédiaires, en favorisant un adoucissement de l'acier par un mécanisme d'auto-recuit lors des retours à température ambiante.

Les contraintes que doit ensuite respecter l'acier chez le fabricant de soupapes sont multiples et généralement incontournables, étant donné que les lignes de fabrication sont largement intégrées et automatisées.

Le fabricant procède dans un premier temps au cisaillage des barres, puis il réalise ensuite l'opération proprement dite de mise en forme des soupapes à chaud, soit par forgeage, soit par extrusion.

La première opération de cisaillage suppose que le métal ne soit pas fragile, que sa dureté soit peu élevée et qu'il offre un comportement peu abrasif vis-à-vis des outils de cisaillage. En particulier, les carbures grossiers dans l'acier à cisailler sont source de détérioration du tranchant des cisailles, et sont donc à éviter.

Dans la deuxième opération majeure de transformation à chaud des lopins en soupape, le métal doit répondre aux critères suivants.

Les opérations de transformation étant réalisées généralement aux températures les plus élevées possible (1150 à 1200°C), le métal doit offrir une bonne malléabilité à ces températures.

En outre, comme la tige de la soupape est généralement peu déformée pendant cette opération, sa structure est largement tributaire de la structure de la barre initiale, et surtout de son évolution au cours du cycle de réchauffage avant mise en forme de la soupape. La structure de l'acier doit donc présenter une grande stabilité vis-à-vis des chauffages à des températures élevées (1150-1200°C).

Après la mise en forme, le fabricant procède au traitement thermique et au parachèvement de la soupape. L'acier doit alors répondre aux traitements thermiques appliqués de façon à être conforme au cahier des charges de l'utilisateur.

On peut classer en deux catégories les aciers inoxydables martensitiques connus de l'art antérieur, la première étant constituée d'aciers à basse teneur en carbone (C ≤ 0,1%), et la deuxième d'aciers à teneur élevée en carbone (jusqu'à environ 1%).

Les aciers martensitiques inoxydables à basse teneur en carbone peuvent contenir typiquement jusqu'à 17% de chrome et offrent une bonne tenue à la corrosion, qui serait compatible avec l'application privilégiée envisagée pour l'invention. Toutefois, ces aciers sont très trempants, sensibles aux tapures et répondent difficilement aux traitements de recuit qui visent à abaisser la dureté. En outre, comme ils ne contiennent que peu de carbone, leur dureté maximale en trempe HF n'atteint pas les niveaux requis, tandis que leur faible teneur en carbures est une limitation à leur résistance à l'abrasion.

Les aciers martensitiques inoxydables à teneurs élevées en carbone connus dans l'art antérieur offrent une bonne tenue à l'abrasion, d'autant meilleure que le taux de carbures croît, et des niveaux de dureté à l'état brut de trempe HF qui croissent régulièrement avec la teneur en carbone. D'une façon générale, les aciers alliés au carbone voient leur dureté s'élever avec la teneur en carbone. Une teneur minimale en carbone de 0,45% est nécessaire pour conférer une dureté minimale de 58 HRC à l'acier brut de trempe.

Il existe dans l'art antérieur de nombreux aciers contenant jusqu'à 17% de chrome et plus de 0,45% de carbone qui répondent à plusieurs critères du cahier des charges défini précédemment. Mais aucun ne répond pleinement à ce cahier. Par exemple, ceux qui contiennent plus que 0,5% de carbone voient leur tenue à la corrosion très sensiblement amoindrie, car le chrome, qui est l'élément nécessaire à la tenue à la corrosion, est « fixé » en grande proportion par les carbures de chrome (Fe, Cr)₇ C₃ ou (Fe, Cr)₂₃ C₆. Le chrome ainsi consommé par les carbures est « prélevé » dans la matrice avoisinante dont la tenue à la corrosion se trouve ainsi fortement abaissée. En outre, plus la teneur en carbone croît, et plus ces aciers deviennent fragiles à l'état traité, voire à l'état adouci.

D'autre part, une majorité de ces aciers carburés contient des proportions variables en éléments formant des carbures, tels que le molybdène, le tungstène, le niobium. Ils apportent un surcoût de matière inutile dans l'application envisagée.

Enfin, sauf cas particulier, la trempabilité des aciers inoxydables martensitiques de l'art antérieur n'est pas adaptée à la gamme et aux lignes de fabrication des soupapes. Généralement, les aciers très chargés en chrome et contenant environ 0,5% ou plus de carbone offrent une trempabilité élevée non nécessaire, voire même indésirée car cela implique de rajouter des cycles de recuit dans la gamme de fabrication. Ainsi, l'acier X85CrMoV 18-2, utilisé pour des soupapes d'admission très sollicitées et réclamant des résistances à chaud élevées, contient beaucoup (2 à 3%) de molybdène, qui est un élément coûteux. Il est caractérisé par une forte trempabilité qui est la cause de fortes contraintes d'origine thermomécanique ou provenant de la transformation martensitique, et de rebuts lors de la fabrication des produits intermédiaires par l'aciériste et le transformateur (forgeron ou lamineur).

La présente invention repose notamment sur une addition au simple système Fer-Chrome-Carbone de vanadium et de deux éléments à très faible coût, le silicium et l'azote, et cela dans les proportions suivantes (les pourcentages sont des pourcentages en poids) :
- C :: 0,45 à 0,55%
- Cr:: 12 à 18%, de préférence 14 à 16%
- Si :: 1 à 2,5%, de préférence 1 à 2%
- Mn :: traces à 2%, de préférence traces à 1%, de préférence avec Si%/Mn% ≥ 1
- V :: 0,2 à 0,5%
- Mo :: traces à 0,5%, de préférence 0,2 à 0,5%
- N :: 0,05 à 0,15%, avec C+N compris entre 0,55 et 0,70%
- Ni :: traces à 1%, de préférence traces à 0,5%
- Cu :: traces à 0,25%, ou Cu ≤ 0,5 x Ni si Cu > 0,25%
- Co :: traces à 1%
- W :: traces à 0,2%
- Nb :: traces à 0,15%
Traces ≤ Al ≤ 0,025%, de préférence ≤ 0,015%
Traces ≤ Ti ≤ 0,010%
Traces ≤ S ≤ 0,030%, de préférence ≤ 0,003%
Traces ≤ P ≤ 0,040%, de préférence ≤ 0,010%
Traces ≤ B ≤ 0,0050%, de préférence ≤ 0,0020%

Fer et impuretés résultant de l'élaboration : complément à 100%.

L'addition de silicium joue un rôle primordial pour atteindre et ajuster toutes les propriétés et comportements demandés à l'acier. En particulier, le silicium contrôle la trempabilité de la structure.

Habituellement, les aciers inoxydables martensitiques sont classés dans la catégorie des aciers « auto-trempants », c'est-à-dire que la transformation martensitique de leur structure est très facilement obtenue lors d'un refroidissement à partir d'une température située dans leur domaine d'austénisation. En effet, pour des teneurs modérées en carbone, l'austénite de ces aciers, formée à haute température, peut être refroidie jusqu'à de basses températures, par exemple 250°C, sans qu'elle soit le siège d'une transformation structurale quelconque : elle est dans un état métastable. Si l'on poursuit le refroidissement, l'austénite métastable se transforme assez brutalement en martensite, à partir d'une température Ms, caractéristique de chaque acier.

Dans les aciers dits « auto-trempants », la métastabilité de la structure austénitique est très marquée, même en cas de faibles vitesses de refroidissement. Ainsi, avec les aciers inoxydables martensitiques du système Fe-Cr-C à teneurs faibles ou modérées en carbone, il est possible d'obtenir une pleine transformation martensitique à coeur de produits de forte section, même en cas de refroidissements lents, par exemple à l'air calme. Cela n'est pas possible dans les aciers au carbone du système Fe-C, car la précipitation du carbure Fe₃C est très rapide et se produit donc facilement lors des refroidissements effectués à partir du domaine austénitique. On dit alors qu'il se produit la décomposition perlitique de l'austénite.

Si celle-ci ne se produit pas dans les aciers inoxydables martensitiques, c'est parce que le carbure Fe₃C n'est pas le carbure d'équilibre thermodynamique. Le carbure d'équilibre des aciers inoxydables martensitiques du système Fe-Cr-C est le carbure (Fe, Cr)₂₃ C₆, et sa cinétique de précipitation est nettement plus lente que celle du carbure Fe₃C.

Un fort pouvoir trempant est intéressant au stade des produits finis, lorsque l'on cherche à obtenir des propriétés mécaniques élevées par traitement thermique de l'acier, mais est généralement source de multiples problèmes tout au long de la gamme de fabrication des produits. On pourra citer les tapures des lingots et des demi-produits, les problèmes de fragilité et de dureté excessives, l'obligation d'ajouter des cycles de recuit dans la gamme pour diminuer la dureté du métal,...

Tout cela est coûteux en rebuts, précautions et alourdissement de la gamme de fabrication, et c'est pourquoi une faible trempabilité de l'acier est préférée au stade des fabrications.

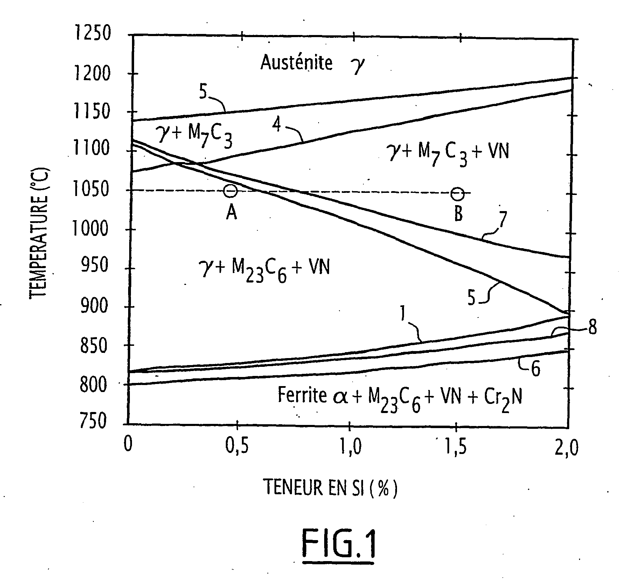

Les compositions d'acier utilisées dans l'invention, qui sont typiques des aciers martensitiques inoxydables du système Fe-Cr-C, offrent néanmoins une trempabilité relativement modérée, juste adaptée à des produits finis de faibles dimensions, tels que les soupapes pour moteur à explosion. C'est l'addition d'une teneur en silicium supérieure à 1% qui leur confère cette propriété. Les inventeurs ont découvert que le silicium provoque la précipitation stable du carbure (Fe, Cr)₇C₃ dans un large domaine des températures d'austénisation lorsque sa teneur est supérieure à 1%, comme cela est illustré sur la figure 1 qui représente une coupe pseudo-binaire, en fonction de la teneur en silicium, du diagramme de phases d'une composition d'acier selon l'invention. Les autres éléments principaux sont C = 0,55% ; Mn = 0,5% ; Cr = 15,5% ; Mo = 0,3% ; V = 0,3% ; N = 0,1%. Ce diagramme est une modélisation réalisée à l'aide du logiciel THERMOCALC et de la base de données TCFE, qui sont d'utilisation courante en métallurgie.

Sur ce diagramme :
- la limite repérée par « 1 » correspond à la température dite Ae3 correspondant à l'équilibre entre le domaine de l'austénite γ et le domaine où coexistent l'austénite γ et la ferrite α ;
- la limite repérée par « 4 » correspond à la température d'apparition du nitrure de vanadium VN lors du refroidissement ;
- les limites repérées par « 5 » correspondent à l'apparition du carbure (Fe, Cr)₇C₃ dans l'austénite ;
- la limite repérée « 6 » correspond à la température dite Ae1 correspondant à l'équilibre entre le domaine où coexistent l'austénite γ et la ferrite α et le domaine de la ferrite α ;
- la limite repérée « 7 » correspond au solvus du carbure (Fe,Cr)₂₃C₆, qui devient le carbure stable, en substitution du carbure (Fe,Cr)₇C₃, en dessous de la limite « 5 » inférieure ;
- la limite repérée « 8 », entre les limites « 1 » et « 6 », est le solvus du nitrure Cr₂N.

Sur le plan expérimental, on a élaboré puis forgé les deux compositions suivantes, l'une de référence (non conforme à l'invention) à basse teneur en silicium (A), l'autre (B) représentative des aciers utilisés dans l'invention, à haute teneur en silicium et au moins très voisine de la précédente sur les autres éléments. Ces deux compositions sont situées sur le diagramme de la figure 1, et sont décrites dans le tableau 1.

**Tableau 1 : composition des échantillons testés**

| Eléments (% en poids) | C | Si | Mn | Ni | Cr | Mo | V | N | W | Nb | Cu | Co | Al | Ti | S | P |
|---|---|---|---|---|---|---|---|---|---|---|---|---|---|---|---|---|
| A (référence) | 0,55 | 0,43 | 0,45 | 0,09 | 15,5 | 0,3 | 0,31 | 0,12 | < 0,02 | < 0,01 | 0,022 | 0,018 | ≤ 0,025 | ≤ 0,010 | 0,0016 | 0,0079 |
| B | 0,55 | 1,45 | 0,52 | 0,09 | 15,7 | 0,3 | 0,39 | 0,12 | < 0,02 | < 0,01 | 0,022 | 0,018 | ≤ 0,025 | ≤ 0,010 | 0,0018 | 0,0082 |

On note en particulier que les deux coulées ont une teneur en C+N de 0,67%, proche de la limite maximale de l'invention (0,70%).

Les produits ont été forgés à 1180°C à l'aide d'un pilon à la suite d'un chauffage prolongé à 1180°C. Le cycle d'adoucissement appliqué sur les barres forgées a été le suivant :
- maintien isotherme de 8h à 775°C ;
- puis refroidissement lent en four (moins de 40°/h) jusqu'à 550°C.

Après forgeage et application du traitement thermique initial du type recuit d'adoucissement, ces deux compositions ont été testées en dilatométrie, de façon à définir leurs diagrammes de transformations métallurgiques en refroidissement continu à partir d'une température de 1050°C, située dans leur domaine d'austénisation.

Le taux de transformation martensitique ou bainitique de la composition A reste toujours très élevé pour toutes les vitesses de refroidissement imposées, qui correspondent à des refroidissements à l'air du coeur de barres de diamètres compris entre 25 et 200 mm. Ce matériau sera donc sensible à la formation de tapures aux divers stades de sa mise en forme.

En revanche, la composition B enrichie en silicium selon l'invention se transforme rapidement à haute température (entre 700 et 800°C), selon une décomposition de l'austénite en ferrite, carbures et nitrures. En dilatométrie, la décomposition de l'austénite de cet acier riche en silicium s'apparente fortement à la transformation perlitique classique des aciers au carbone. Pour cette composition B utilisable dans l'invention, le taux résiduel de transformation martensitique est négligeable pour toutes les vitesses de refroidissement correspondant à un refroidissement à l'air à coeur de barres de diamètres supérieurs ou égaux à 50mm, et reste limité à coeur jusqu'au diamètre 25mm.

Le risque d'apparition de tapures sur les produits est donc très faible pendant tout le cycle de la fabrication des soupapes.

Par ailleurs, la pleine transformation martensitique de la composition B de l'invention reste possible moyennant l'application d'une grande vitesse de refroidissement. Après mise en solution à 1050°C et trempe à l'huile d'échantillons de diamètre 20 mm, la structure de l'acier B est martensitique et offre une dureté de 58 HRC. Elle est, en outre, notablement plus fine et homogène que celle de l'acier A. On voit sur la figure 1 qu'au moment de la trempe, ce sont les carbures (Fe, Cr)₇C₃ qui sont présents dans l'acier B, alors que ce sont les carbures (Fe, Cr)₂₃C₆ qui sont présents dans l'acier A.

Les propriétés revendiquées pour les compositions d'acier utilisées dans l'invention sont obtenues grâce à l'équilibrage précis des éléments d'alliage.

Le carbone est l'élément essentiel pour conférer sa dureté à la martensite, ou éventuellement à la bainite, formée(s) à la trempe. Sa teneur minimale doit être de 0,45% pour atteindre une dureté de 58 HRC après traitement thermique, mais aussi pour atteindre une structure métallurgique exempte de ferrite delta.

Sa teneur maximale est limitée à 0,55%. Au-delà le carbone forme une trop grande quantité de carbures de chrome, fragilisante et inutile pour l'application, voire nocive dans le cas de carbures massifs issus de la solidification des lingots, tandis que la fraction de chrome « libre » dans la matrice devient trop faible pour que celle-ci présente la tenue requise à l'oxydation.

Le silicium est un élément d'addition majeur de l'invention. De façon à obtenir la faible trempabilité recherchée, sa teneur doit être supérieure à 1 %, préférablement supérieure à 1,4%. Elle est limitée au maximum à 2,5%, de façon à conserver une structure sans ferrite stable. Le silicium offre une deuxième action très favorable pour l'emploi de l'acier en renforçant sa tenue à l'oxydation et à la corrosion par le soufre : il complète l'action du chrome. Il constitue aussi un élément de désoxydation efficace et peu coûteux. Toutefois, le silicium abaisse la température de début de fusion (solidus) de l'acier, ce qui a pour conséquence de réduire le domaine de forgeabilité.

Préférablement, la teneur maximale en silicium sera limitée à 2% lorsqu'on recherche la meilleure malléabilité à haute température, soit jusqu'à 1200°C.

Le chrome est un élément essentiel de l'acier utilisé dans l'invention et permet sa protection vis-à-vis des environnements de la soupape d'admission. Ceux-ci, dans les moteurs diesels à réinjection de gaz d'échappement, sont constitués en fonctionnement de gaz chauds oxydants, et éventuellement sulfurants selon la teneur en soufre dans le carburant. Les condensats de ces gaz sont également corrosifs. L'oxyde de chrome qui se forme en surface de l'acier n'est réellement continu et protecteur que pour une teneur minimale moyenne dans la matrice de l'acier de 12%. On considère donc que cette valeur est la teneur minimale en chrome dans le cadre de l'invention. Compte tenu de ce que le carbone présent dans l'acier fixe une fraction du chrome, et que cette fraction n'est donc plus disponible pour la formation du film d'oxyde, la teneur minimale en chrome dans la composition est, cependant, préférablement de 14%.

La teneur maximale en chrome est dictée par l'équilibre métallurgique de l'acier et, en particulier, par le souci d'obtenir une structure à matrice purement austénitique, sans ferrite, aux températures de traitement thermique et de transformation à chaud. Sans addition de nickel, élément qui maintient la structure austénitique mais qui est aussi coûteux, et en présence de teneurs en carbone + azote de 0,55 à 0,70% comme requis par l'invention, la teneur maximale admissible en chrome est de 18%. Comme une addition conséquente de silicium est pratiquée dans l'invention, et que cet élément a un effet similaire au chrome, c'est-à-dire qu'il favorise l'apparition de la phase ferritique, la teneur maximale en chrome est préférablement limitée à 16%. Au-delà, il y a un risque d'apparition de ferrite delta lorsque les teneurs en Si sont hautes et les teneurs en C + N basses.

Une addition d'azote est pratiquée jusqu'à une teneur maximale de 0,15%, préférentiellement jusqu'à 0,12%, de façon à ne pas dépasser le maximum de solubilité de cet élément lors de la solidification. Cela conduirait à la formation de bulles de gaz dans le métal, se traduisant par l'apparition de porosités (soufflures) sur le métal solidifié.

L'azote, peu coûteux, est utilisé comme addition complémentaire au carbone pour deux raisons.

D'une part, il stabilise la structure austénitique entre 1000 et 1200°C environ, et peut donc se substituer pour partie au carbone sans les inconvénients d'une précipitation trop abondante des carbures. Ainsi, grâce à l'addition d'azote, on peut éviter la formation de ferrite delta dans un acier riche en chrome et à teneur limitée en carbone.

D'autre part, l'azote est bénéfique à la tenue à la corrosion de l'acier en présence de condensats corrosifs.

Pour ces deux raisons, la teneur minimale en azote est de 0,05%, et doit être telle que C + N ≥ 0,55% de façon à atteindre le bon équilibre de composition (absence de ferrite delta). Elle doit être telle que C + N ≤ 0,70% pour que les teneurs maximales en carbone et azote telles que définies précédemment ne soient pas dépassées.

Une addition de vanadium est pratiquée de façon à former avec l'azote et le carbone des précipités de nitrure et de carbure de vanadium, stables aux températures de traitement thermique. Cela permet de limiter le grossissement du grain de la structure à ces températures, où se produit une recristallisation du métal transformé par laminage ou forgeage.

Les nitrures et carbures de vanadium sont favorables à la tenue à l'abrasion de l'acier, et sont aussi connus pour accroître la tenue au fluage des aciers martensitiques.

En outre, la formation du nitrure de vanadium VN permet de limiter celle du nitrure de chrome Cr₂N qui appauvrit la matrice en chrome.

Ces effets sont obtenus pour une teneur en vanadium comprise entre 0,2 et 0,5%.

Une addition mineure de molybdène peut aussi être pratiquée pour son effet, connu de l'art antérieur, qui est de contribuer à limiter la fragilité de l'acier traité pour de hautes duretés. Un effet significatif commence à exister à partir de 0,2%. Une teneur maximale de 0,5% est admise pour ne pas augmenter inutilement le coût matières de l'acier.

Ces additions modérées en molybdène et vanadium offrent enfin l'avantage économique important, lors de l'élaboration de l'acier, de permettre l'utilisation de matières premières issues du recyclage d'aciers qui contiennent ces éléments.

Ces matières peuvent aussi contenir d'autres éléments résiduels, non indispensables aux propriétés de l'acier utilisé dans l'invention, et pouvant donc n'être présents qu'à l'état de traces. Les éléments métalliques résiduels que l'on retrouve le plus souvent dans les charges issues d'aciers à recycler sont essentiellement le manganèse, le nickel, le cuivre, le tungstène, le niobium et, plus rarement, le cobalt.

Le manganèse est présent dans la plupart des matières premières ferreuses que l'on peut trouver sur le marché. C'est un élément facilement oxydable dans les fours d'élaboration comme le four à arc électrique, mais son élimination délibérée et poussée lors de l'élaboration peut se révéler coûteuse, et elle n'est pas utile dans l'invention. Les charges de recyclage peuvent en contenir ordinairement jusqu'à 2%, ce qui est tolérable dans le cadre de l'invention, et une large fraction est de toute façon perdue par oxydation lors de l'élaboration : il est donc aisé de contenir la teneur finale en manganèse à moins de 1% dans les aciers utilisés dans l'invention, grâce à un choix judicieux d'un mélange de matières premières adapté à la conduite de l'élaboration de l'acier dans les fours des aciéries.

Au regard des propriétés recherchées pour l'acier utilisé dans l'invention, le manganèse peut se révéler nocif à des teneurs supérieures à 2% car il est connu, d'une façon générale, pour réduire la résistance à l'oxydation et à la sulfuration, pour stabiliser l'austénite et pour accroître la trempabilité martensitique des aciers. Sa teneur résiduelle maximale devra donc être contenue à moins de 2% et, préférentiellement, entre des traces et 1 %, ce qui est aisé et peu coûteux pour l'aciériste.

Encore préférentiellement, l'acier utilisé dans l'invention contient des teneurs en manganèse et silicium telles que leur rapport Si% / Mn% est supérieur ou égal à 1, car cette condition favorise la coulabilité du métal liquide dans les réfractaires de coulée en présence d'une atmosphère naturelle.

Le nickel est de plus en plus présent dans les matières premières ferreuses de recyclage : ainsi, il est commun de le retrouver dans des proportions de 0,2 à 0,4%. Contrairement au manganèse, le nickel des matières premières est peu oxydé lors de l'élaboration, par exemple dans les fours à arc électrique conventionnels. Il va donc se retrouver quasi-intégralement dans le métal final.

Au regard de l'acier utilisé dans l'invention, c'est un élément qui accroît fortement la trempabilité et qui est, à ce titre, indésirable à des teneurs supérieures à 1 %. Préférentiellement, il sera contenu au maximum entre des traces et 0,5 %.

Le cuivre, comme le nickel, est lui aussi présent dans les matières premières ferreuses courantes de recyclage, à des teneurs d'environ 0,1 à 0,2%, voire jusqu'à 0,4 %, et n'est pas éliminé lors de l'élaboration. Le cuivre est connu pour dégrader la forgeabilité des aciers fer - chrome, parce qu'il favorise la formation d'un film liquide dans les joints de grains des aciers lorsqu'ils sont portés aux très hautes températures de la gamme de transformation thermomécanique. Il est aussi connu que le nickel combat très efficacement ce mécanisme de « liquation » inter-granulaire en stabilisant la phase austénite au détriment de la phase liquide. Si du nickel est significativement présent, l'acier utilisé dans l'invention peut donc tolérer une teneur en cuivre relativement élevée.

Pour toutes ces raisons, la teneur maximale en cuivre de l'acier de l'invention est :
- soit limitée au maximum à 0,25% ;
- soit, si Cu > 0,25%, limitée à 0,5 fois la teneur en nickel.

Le tungstène, qui est un élément coûteux, est présent dans certaines matières premières de recyclage. A de faibles teneurs, le tungstène apporte aux aciers des propriétés semblables à celles qu'apporte le molybdène. Ainsi, dans l'art antérieur, le tungstène est souvent considéré sous forme d'un « équivalent molybdène » qui est défini par Mo (équivalent) = 0,5 fois la teneur en tungstène, en % pondéral. Pour ces raisons, l'acier utilisé dans l'invention peut contenir de 0 à 0,2 % de tungstène.

Le cobalt peut exceptionnellement se retrouver dans certaines matières premières spécifiques. Comme le nickel, il est peu oxydable lors des élaborations dans les fours électriques à arc classiques. Toutefois, contrairement au nickel, le cobalt n'a pas d'effet nocif sur les propriétés et le comportement des soupapes de l'invention. La composition d'acier utilisée dans l'invention peut donc comporter jusqu'à 1% de cobalt, sous forme d'élément résiduel.

Le niobium est connu pour former, dès de très faibles teneurs, des carbures et des nitrures stables qui contribuent, dans les aciers, à limiter le grossissement du grain austénitique aux températures d'austénisation ou de transformation thermo-mécanique. Le niobium peut donc compléter efficacement le rôle du vanadium pour le contrôle de la taille des grains dans l'acier utilisé dans l'invention. Mais le niobium est aussi réputé pour promouvoir la précipitation de carbures et nitrures eutectiques en réseau fragilisant, lors de la solidification des lingots d'acier. Pour ces raisons, la teneur en niobium de l'acier utilisé dans l'invention est limitée à 0,15 %.

Une addition de bore est possible. On pense que cet élément peut apporter, dans certains cas, une cohésion forte aux joints de grains. Si on désire en ajouter, ce qui n'est nullement indispensable dans le cadre de l'invention, sa teneur doit être comprise entre des traces et 0,0050%, de préférence entre des traces et 0,0020%.

L'aluminium et le titane sont à éviter du fait qu'ils formeraient avec l'azote des nitrures fragilisants, donc indésirables.

La teneur en aluminium doit être ≤ 0,025%, de préférence ≤ 0,015%. La teneur en titane doit être ≤ 0,010%.

Concernant le soufre, les normes concernant ce type d'aciers tolèrent jusqu'à 0,030%. Toutefois, une teneur maximale de 0,003% est préférée, pour éviter les problèmes de fragilité intergranulaire et de ségrégations classiquement liés à la présence de cet élément.

Concernant le phosphore, on en tolère jusqu'à 0,040% comme dans les normes, mais on préfère une teneur maximale de 0,010% pour les mêmes raisons que pour le soufre.

Concernant l'oxygène, l'invention n'a pas d'exigences particulières. Sauf si on désire une propreté inclusionnaire particulièrement bonne, on se contente de la teneur en oxygène résultant naturellement de la teneur en silicium (qui est généralement l'élément désoxydant prédominant) et des conditions d'élaboration nécessaires à l'obtention des teneurs visées pour les autres éléments. Une teneur en oxygène de l'ordre de 0,0050% ou encore moins pourra être couramment obtenue, mais n'a rien d'impératif dans le cas général, car les propriétés mécaniques qui sont prioritairement à optimiser dans le cadre de l'invention ne dépendent que peu de la propreté inclusionnaire.

Les aciers utilisés dans l'invention peuvent être élaborés selon les procédés applicables aux matériaux usuels, en tenant compte de leurs particularités. Ainsi, on ne peut pas les élaborer sous vide car il faut pratiquer une addition d'azote sous forme gazeuse.

On pourra utiliser à cet effet un four électrique, ou un réacteur AOD, ou tout autre moyen adapté à l'élaboration d'aciers contenant des teneurs élevées en azote, y compris les procédés d'affinage secondaire par refusion sous laitier électroconducteur. La refusion peut se faire, par exemple, sous laitier avec électrode consommable si l'on recherche une grande propreté inclusionnaire.

La coulée du métal s'effectue soit par la voie lingots, soit par la voie coulée continue.

Un traitement thermique d'homogénéisation des structures de solidification est réalisable, si nécessaire, à des températures comprises entre 1150 et 1225°C.

Ces opérations sont suivies d'une étape de transformation thermomécanique à chaud du demi-produit coulé, par exemple un forgeage et/ou un laminage, à des températures typiquement comprises entre 1000 et 1200°C. Un recuit est optionnellement applicable après la transformation à chaud, si l'on souhaite adoucir au maximum la structure en vue d'opérations à température ambiante telles qu'un redressage des barres, un usinage. L'adoucissement des produits est réalisable moyennant un recuit d'adoucissement isotherme à des températures comprises entre 650 et 900°C, pendant des durées de 2 à 8h, suivi d'un refroidissement à l'air ou dans le four à la vitesse de refroidissement du four.

Puis on réalise le ou les traitements thermiques ou thermomécaniques finaux qui vont conférer aux soupapes leur forme et leurs propriétés définitives.

On y procède à partir de lopins découpés dans les demi-produits résultant de la transformation à chaud et du recuit d'adoucissement éventuel précédents. Ces lopins sont ensuite forgés ou extrudés à haute température (1150-1200°C par exemple) pour former les soupapes. Puis, après refroidissement, on procède aux traitements thermiques finaux. Ceux-ci peuvent être une trempe suivie d'un revenu, ou un recuit préalable à un usinage final.

On procède, en plus, en fin de fabrication, à une trempe superficielle localisée, par exemple une trempe HF ou tout autre procédé donnant des résultats comparables, dans des zones qui doivent présenter une dureté élevée : la portée du siège de soupape et/ou l'extrémité de la tige.

Un exemple de mise en oeuvre du procédé selon l'invention est le suivant.

L'acier a été élaboré au four électrique, avec la composition C suivante :
- C = 0,510 %
- Mn = 0,462 %
- Si = 1,43 %
- Cr = 15,77 %
- V = 0, 370 %
- Mo = 0,305 %
- N=0,129%
- S = 0,0019 %
- P = 0,0094 %
- Ni = 0,075 %
- W ≤ 0,020%
- Nb ≤ 0,010%
- Cu ≤ 0,02%
- Co = 0,017%
- Al ≤ 0,025%
- Ti ≤ 0,010%
- Fe = le reste

La somme C + N est de 0,64%, donc située dans le milieu de la gamme de l'invention.

Il a été ensuite coulé en lingots et transformé en barres de 85 mm par laminage, après chauffage à 1180°C.

Les barres ont ensuite subi un recuit isotherme de 8 h à 880°C, puis un refroidissement dans le four jusqu'à 550°C, température à laquelle les barres ont été sorties du four et refroidies à l'air.

La dureté des barres après cet adoucissement était alors effectivement faible : 235 HB, soit 22 HRC environ (la mesure HRC n'ayant, à ce faible niveau de dureté, plus grande signification). La limite de trempabilité à coeur, pour un refroidissement à l'air, correspondait à un diamètre de 40 mm.

Puis ont eu lieu, à partir des barres ainsi obtenues, les opérations classiques de mise en forme de la soupape, incluant une mise en forme à chaud par forgeage ou extrusion de tout ou partie du lopin découpé dans la barre. Elles ont été suivies, le cas échéant, par des traitements thermiques adaptant les propriétés de la soupape aux désirs du client final.

Ainsi, par exemple, après une mise en solution à 1050°C pendant 30 minutes et un refroidissement rapide qui correspondait à un diamètre de 17 mm refroidi naturellement à l'air, la dureté de la structure bainito-martensitique était de 58,5 HRC.

Cette dureté peut ensuite être classiquement modifiée par un traitement de trempe et revenu. Le tableau 2 montre des exemples de conditions de revenu et les duretés HRC qu'elles permettent d'obtenir sur les barres précédentes.

**Tableau 2 : Duretés HRC obtenues sur l'acier C en fonction des conditions de revenu.**

| Revenu température/durée/refroidissement | dureté HRC |
|---|---|
| 500°C/2h/Air | 57.1 |
| 525°C/2h/Air | 54.4 |
| 550°C/2h/Air | 47.4 |
| 575°C/2h/Air | 44.0 |
| 600°C/2h/Air | 41.1 |
| 625°C/2h/Air | 39.5 |
| 650°C/2h/Air | 37.5 |
| 700°C/2h/Air | 33.1 |
| 750°C/2h/Air | 29.4 |
| 800°C/2h/Air | 24.6 |

Enfin, conformément à l'invention, une trempe HF a été pratiquée sur l'extrémité de la tige et/ou la portée du siège de la soupape, pour leur conférer généralement une dureté de 55 à 60 HRC.

Un autre exemple de traitement selon l'invention est le suivant :

L'acier a été élaboré, avec la composition D suivante :
- C = 0,470%
- Mn = 0,585%
- Si = 1,36%
- Cr = 15,40%
- V = 0,36%
- Mo = 0,31%
- N = 0,100%
- S = 0,0021%
- P = 0,0068%
- Ni = 0,08%
- W < 0,02%
- Nb < 0,01%
- Cu < 0,02%
- Co = 0,017%
- Al ≤ 0,025%
- Ti ≤ 0,010%
- Fe = le reste

La somme C+N est de 0,57%, donc située dans la partie inférieure de la gamme de compositions utilisée dans l'invention.

Le lingot coulé a été homogénéisé pendant 8 heures à 1120°C, puis a été forgé à l'aide d'un pilon, en une barre de section carrée de 17 mm de côté, à la température de 1180°C. A la suite de l'opération de forgeage, les barres ont été enfournées dans un four à 650°C, pour une durée de 2 heures, en vue d'un traitement d'adoucissement du métal par recuit isotherme post-forgeage.

A ce stade, le métal a été testé par l'essai de traction « rapide » à la vitesse de déformation de 85 mm/s et à des températures comprises entre 1000 et 1230°C, en vue d'apprécier sa malléabilité dans le domaine des températures de transformation thermo-mécanique. La malléabilité du métal est décrite par les paramètres habituels de l'essai de traction, c'est-à-dire l'allongement à la rupture (A %) et la réduction de section au niveau de la rupture (Z %). La résistance à chaud est représentée par la variable de contrainte maximale à rupture (Rm Mpa).

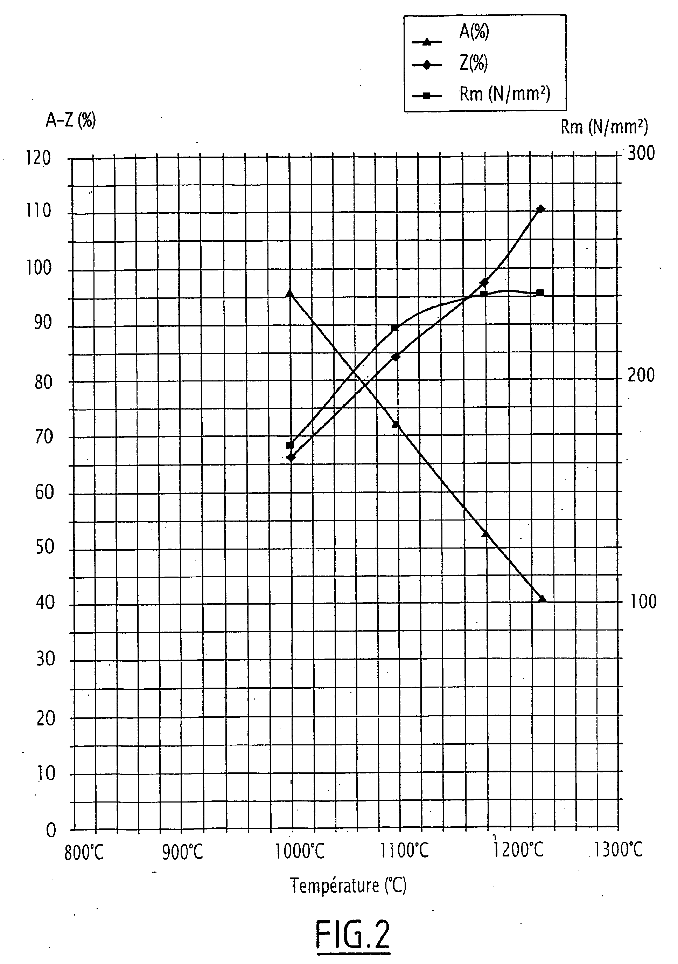

Les courbes d'évolution de ces variables en fonction de la température sont présentées sur la figure 2 ; la malléabilité de l'acier de composition D présente un maximum entre 1100 et 1230°C, caractérisé par les plus fortes valeurs de A et de Z (%).

En deçà de 1100°C, l'accroissement continu de la résistance mécanique (Rm), réduit progressivement la plasticité du métal.

Pour cette composition D, dont la somme des teneurs C + N est située en limite inférieure des valeurs selon l'invention, le taux de transformation martensitique, mesuré à la suite d'essais de dilatométrie conduits à diverses vitesses de refroidissement depuis la température d'austénitisation de 1050°C, devient négligeable pour toutes les vitesses de refroidissement inférieures ou égales à celle correspondant à un refroidissement naturel à l'air à coeur d'une barre de diamètre 60mm environ.

Par ailleurs, la martensite formée à la suite d'un refroidissement plus rapide depuis 1050°C, offre une dureté de 57,7 HRC.

Puis ont eu lieu les opérations de mise en forme de la soupape.

Un revenu ultérieur de la structure purement martensitique permettait ensuite d'obtenir une très large variété de duretés dans l'acier de composition D, comme indiqué ci-dessous dans le tableau 3 :

**Tableau 3 : Duretés HRC obtenues sur l'acier D en fonction des conditions de revenu.**

| Traitement de revenu | dureté HRC |
|---|---|
| 500°C/2h/Air | 56,6 |
| 525°C/2h/Air | 52,3 |
| 550°C/2h/Air | 46,9 |
| 575°C/2h/Air | 43,8 |
| 600°C/2h/Air | 41,2 |
| 625°C/2h/Air | 39,6 |
| 650°C/2h/Air | 38,2 |
| 700°C/2h/Air | 32,2 |
| 750°C/2h/Air | 27,6 |
| 800°C/2h/Air | 24,5 |

Enfin, on a pratiqué une trempe HF sur l'extrémité de la tige et/ou la portée du siège de la soupape, conformément à l'invention.

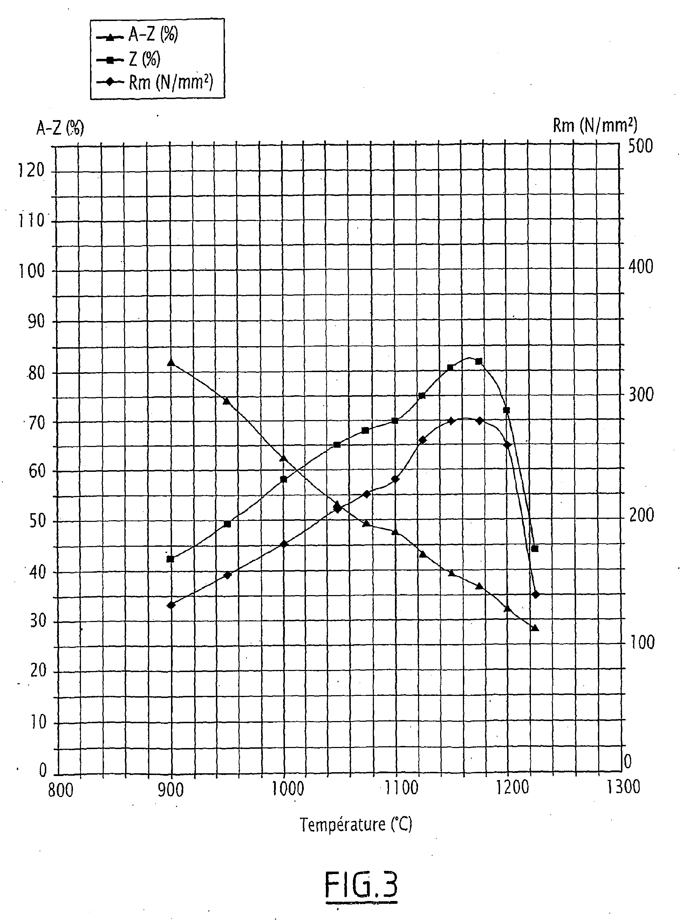

A titre de comparaison, la figure 3 présente, de la même façon que la figure 2, les courbes d'évolution de A%, Z% et Rm en fonction de la température pour un acier E de composition non conforme à l'invention :
- C = 0,837%
- Si = 0,758%
- Mn = 1,22%
- S < 0,0001%
- P = 0,016%
- Ni = 0,252%
- Cr = 17,35%
- Mo = 2,29%
- V = 0,478%
- Cu = 0,088%
- N = 0,0290%
- B = 0,0017%
le reste étant du fer et des impuretés.

Cet acier E est donc un acier inoxydable martensitique au chrome-molybdène à haute teneur en carbone du type X85CrMoV 18-2 précédemment cité. Le métal est issu d'un lingot d'environ 1,5 tonne d'une coulée industrielle. Ce lingot a été homogénéisé à la température de 1170°C, puis a été laminé au diamètre 90mm brut, en partant de cette température. En outre, la barre utilisée pour l'essai a été traitée par recuit isotherme à 830°C, pour adoucissement avant écroûtage et découpe.

La malléabilité de cet acier présente un maximum marqué dans une plage d'ampleur limitée entre 1120 et 1200°C environ, puis chute brutalement. Cet acier est donc très sensiblement moins tolérant que l'acier D à des variations dans les conditions de traitement. Surtout, dans l'absolu, sa malléabilité est nettement moindre que celle de l'acier D, ses valeurs maximales de A% et Z% étant très inférieures à celles de l'acier D. Ainsi, en plus d'avoir un coût matière nettement plus élevé dû à la présence massive de molybdène, cet acier E de référence répond sensiblement moins bien aux problèmes techniques posés que les aciers utilisés dans le cadre de l'invention.

## Revendications

1. Procédé de fabrication d'une soupape monobloc de moteur à explosion, **caractérisé en ce que** :
- on élabore et on coule un acier de composition, en pourcentages pondéraux :
• 0,45 % ≤ C ≤ 0,55 %
• 12 % ≤ Cr ≤ 18 %
• 1 % ≤ Si ≤ 2,5 %
• traces ≤ Mn ≤ 2 %
• 0,2 % ≤ V ≤ 0,5 %
• traces ≤ Mo ≤ 0,5 %
• 0,05 % ≤ N ≤ 0,15 %, avec 0,55 % ≤ C + N ≤ 0,70 %
• traces ≤ Ni ≤ 1 %
• traces ≤ Cu ≤ 0,25 %, ou Cu ≤ 0,5 Ni si Cu > 0,25 %
• traces ≤ Co ≤ 1 %
• traces ≤ W ≤ 0,2 %
• traces ≤ Nb ≤ 0,15%
• traces ≤ Al ≤ 0,025%
• traces ≤ Ti ≤ 0,010%
• traces ≤ S ≤ 0,030%
• traces ≤ P ≤ 0,040%
• traces ≤ B ≤ 0,0050%
le reste étant du fer et des impuretés résultant de l'élaboration;
- on le transforme thermomécaniquement à chaud, par exemple par laminage et/ou forgeage entre 1000 et 1200°C ;
- optionnellement on réalise un recuit d'adoucissement, entre 650 et 900°C pendant 2 à 8 h suivi d'un refroidissement à l'air ou dans le four ;
- et on réalise le ou les traitements thermiques ou thermomécaniques finaux qui vont conférer à la soupape sa forme et/ou ses propriétés définitives, comportant une mise en forme à chaud par forgeage ou extrusion, en terminant la fabrication par une trempe superficielle localisée, telle qu'une trempe HF, une trempe plasma ou un choc laser, exécutée sur certaines parties de la soupape.

2. Procédé selon la revendication 1, **caractérisé en ce que** 14 % ≤ Cr ≤ 16%.

3. Procédé selon la revendication 1 ou 2, **caractérisé en ce que** 1 % ≤ Si ≤ 2%.

4. Procédé selon l'une des revendications 1 à 3, **caractérisé en ce que** 0,05 % ≤ N ≤ 0,12 %.

5. Procédé selon l'une des revendications 1 à 4, **caractérisé en ce que** traces ≤ Mn ≤ 1 %.

6. Procédé selon l'une des revendications 1 à 5, **caractérisé en ce que** Si % / Mn % ≥ 1.

7. Procédé selon l'une des revendications 1 à 6, **caractérisé en ce que** 0,2 % ≤ Mo ≤ 0,5 %.

8. Procédé selon l'une des revendications 1 à 7, **caractérisé en ce que** traces ≤ Ni ≤ 0,5 %.

9. Procédé selon l'une des revendications 1 à 8, **caractérisé en ce que** traces ≤ Al ≤ 0,015%.

10. Procédé selon l'une des revendications 1 à 9, **caractérisé en ce que** traces ≤ S ≤ 0,003%.

11. Procédé selon l'une des revendications 1 à 10, **caractérisé en ce que** traces ≤ P ≤ 0,010%.

12. Procédé selon l'une des revendications 1 à 11, **caractérisé en ce que** traces ≤ B ≤ 0,0020%.

13. Procédé selon l'une des revendications 1 à 12, **caractérisé en ce que** lesdits traitements thermiques ou thermomécaniques finaux comportent une trempe suivie d'un revenu.

14. Procédé selon l'une des revendications 1 à 12, **caractérisé en ce que** lesdits traitements thermique ou thermomécaniques finaux comportent un recuit suivi d'un usinage.

15. Procédé selon l'une des revendications 1 à 14, **caractérisé en ce que** les parties de la soupape concernées par la trempe superficielle localisée sont l'extrémité de la tige et/ou la portée du siège.

16. Soupape monobloc de moteur à explosion, **caractérisée en ce qu'**elle a été fabriquée par le procédé selon l'une des revendications 1 à 15.

## Claims

1. Method for producing a unitary valve for an internal combustion engine, **characterised in that**:
- a steel is produced and cast having a composition, in percentages by weight, of:
• 0.45 % ≤ C ≤ 0.55 %
• 12 % ≤ Cr ≤ 18 %
• 1 % ≤ Si ≤ 2.5 %
• trace levels ≤ Mn ≤ 2 %
• 0.2 % ≤ V ≤ 0.5 %
• trace levels ≤ Mo ≤ 0.5 %
• 0.05 % ≤ N ≤ 0.15 %, with 0.55 % ≤ C + N ≤ 0.70 %
• trace levels ≤ Ni ≤ 1 %
• trace levels ≤ Cu ≤ 0.25 %, or Cu ≤ 0.5 Ni if Cu > 0.25 %
• trace levels ≤ Co ≤ 1 %
• trace levels ≤ W ≤ 0.2 %
• trace levels ≤ Nb ≤ 0.15%
• trace levels ≤ Al ≤ 0.025%
• trace levels ≤ Ti ≤ 0.010%
• trace levels ≤ S ≤ 0.030%
• trace levels ≤ P ≤ 0.040%
• trace levels ≤ B ≤ 0.0050%
the balance being iron and impurities resulting from the production operation;
- it is thermomechanically transformed in the hot state, for example, by means of rolling and/or forging between 1000 and 1200°C;
- a softening annealing operation is optionally carried out between 650 and 900°C for from 2 to 8 hours followed by cooling in air or in the oven;
- and the final thermal or thermomechanical processing operation(s) is/are carried out which will confer on the valve the definitive properties and/or shape thereof, involving hot forming by means of forging or extrusion and ending the production with a localised surface quenching operation, such as an HF quenching operation, plasma quenching or laser shock, carried out on specific portions of the valve.

2. Method according to claim 1, **characterised in that** 14 % ≤ Cr ≤ 16 %.

3. Method according to claim 1 or claim 2, **characterised in that** 1 % ≤ Si ≤ 2%.

4. Method according to any one of claims 1 to 3, **characterised in that** 0.05 % ≤ N ≤ 0.12 %.

5. Method according to any one of claims 1 to 4, **characterised in that** trace levels ≤ Mn ≤ 1 %.

6. Method according to any one of claims 1 to 5, **characterised in that** Si % / Mn % ≥ 1.

7. Method according to any one of claims 1 to 6, **characterised in that** 0.2 % ≤ Mo ≤ 0.5 %.

8. Method according to any one of claims 1 to 7, **characterised in that** trace levels ≤ Ni ≤ 0.5 %.

9. Method according to any one of claims 1 to 8, **characterised in that** trace levels ≤ Al ≤ 0.015%.

10. Method according to any one of claims 1 to 9, **characterised in that** trace levels ≤ S ≤ 0.003%.

11. Method according to any one of claims 1 to 10, **characterised in that** trace levels ≤ P ≤ 0.010%.

12. Method according to any one of claims 1 to 11, **characterised in that** trace levels ≤ B ≤ 0.0020%.

13. Method according to any one of claims 1 to 12, **characterised in that** the final thermal or thermomechanical processing operations involve a quenching operation followed by a tempering operation.

14. Method according to any one of claims 1 to 12, **characterised in that** the final thermal or thermomechanical processing operations involve an annealing operation followed by a machining operation.

15. Method according to any one of claims 1 to 14, **characterised in that** the portions of the valve affected by the localised surface quenching are the end of the stem and/or the seat contacting surface.

16. Unitary valve for an internal combustion engine, **characterised in that** it has been produced using the method according to any one of claims 1 to 15.

## Patentansprüche

1. Verfahren zur Herstellung eines einstückigen Ventils für einen Verbrennungsmotor, **dadurch gekennzeichnet, dass**:
- ein Stahl mit der Zusammensetzung in Gewichtsprozenten erstellt und gegossen wird:
• 0,45% ≤ C ≤ 0,55%
• 12% ≤ Cr ≤ 18%
• 1% ≤ Si ≤ 2,5%
• Spuren ≤ Mn ≤ 2%
• 0,2% ≤ V ≤ 0,5%
• Spuren ≤ Mo ≤ 0,5%
• 0,05% ≤ N ≤ 0,15% mit 0,55% ≤ C + N ≤ 0,70%
• Spuren ≤ Ni ≤ 1%
• Spuren ≤ Cu ≤ 0,25%, oder Cu ≤ 0,5 Ni wenn Cu > 0,25%
• Spuren ≤ Co ≤ 1%
• Spuren ≤ W ≤ 0,2%
• Spuren ≤ Nb ≤ 0,15%
• Spuren ≤ Al ≤ 0,025%
• Spuren ≤ Ti ≤ 0,010%
• Spuren ≤ S ≤ 0,030%
• Spuren ≤ P ≤ 0,040%
• Spuren ≤ B ≤ 0,0050%
wobei der Rest Eisen und durch die Erstellung resultierende Verunreinigungen sind;
- ihn thermomechanisch warm transformiert, beispielsweise durch Walzen und/oder Schmieden zwischen 1000 und 1200°C;
- optional ein Entfestigungsglühen zwischen 650 und 900°C während 2 bis 8 Stunden, gefolgt von einem Abkühlen bei Luft oder im Ofen durchgeführt wird;
- und die thermische(n) oder thermomechanische(n) Endbehandlung(en), die dem Ventil seine endgültige Form oder Eigenschaften ver-leihen, eine Warmformung durch Schmieden oder Extrusion umfassen, wobei die Herstellung durch ein örtlich begrenztes Oberflächenhärten, wie ein HF-Härten, ein Plasma- oder Schocklaserhärten, das an bestimmten Bereichen des Ventils durchgeführt wird, beendet wird.

2. Verfahren nach Anspruch 1, **dadurch gekennzeichnet, dass** 14% ≤ Cr ≤ 16%.

3. Verfahren nach Anspruch 1 oder Anspruch 2, **dadurch gekennzeichnet, dass** 1% ≤ Si ≤ 2%.

4. Verfahren nach einem der Ansprüche 1 bis 3, **dadurch gekennzeichnet, dass** 0,05% ≤ N ≤ 0,12%.

5. Verfahren nach einem der Ansprüche 1 bis 4, **dadurch gekennzeichnet, dass** Spuren ≤ Mn ≤ 1%.

6. Verfahren nach einem der Ansprüche 1 bis 5, **dadurch gekennzeichnet, dass** Si%/Mn% ≥ 1.

7. Verfahren nach einem der Ansprüche 1 bis 6, **dadurch gekennzeichnet, dass** 0,2% ≤ Mo ≤ 0,5%.

8. Verfahren nach einem der Ansprüche 1 bis 7, **dadurch gekennzeichnet, dass** Spuren ≤ Ni ≤ 0,5%.

9. Verfahren nach einem der Ansprüche 1 bis 8, **dadurch gekennzeichnet, dass** Spuren ≤ Al ≤ 0,015%.

10. Verfahren nach einem der Ansprüche 1 bis 9, **dadurch gekennzeichnet, dass** Spuren ≤ S ≤ 0,003%.

11. Verfahren nach einem der Ansprüche 1 bis 10, **dadurch gekennzeichnet, dass** Spuren ≤ P ≤ 0,010%.

12. Verfahren nach einem der Ansprüche 1 bis 11, **dadurch gekennzeichnet, dass** Spuren ≤ B ≤ 0,0020%.

13. Verfahren nach einem der Ansprüche 1 bis 12, **dadurch gekennzeichnet, dass** die genannten thermischen oder thermomechanischen Endbehandlungen ein Härten, gefolgt von einem Anlassen, umfassen.

14. Verfahren nach einem der Ansprüche 1 bis 12, **dadurch gekennzeichnet, dass** die genannten thermischen oder thermomechanischen Endbehandlungen ein Härten, gefolgt von einer Metallbearbeitung umfassen.

15. Verfahren nach einem der Ansprüche 1 bis 14, **dadurch gekennzeichnet, dass** die von der örtlich begrenzten Oberflächenhärtung betroffenen Bereiche des Ventils das Ende des Schaftes und/oder die Sitzfläche sind.

16. Einstückiges Ventil für einen Verbrennungsmotor, **dadurch gekennzeichnet, dass** es mit dem Verfahren nach einem der Ansprüche 1 bis 15 hergestellt wird.
